Europäisches Patentamt

European Patent Office

Office européen des brevets

(11) Publication number: **0 651 403 A2**

# EUROPEAN PATENT APPLICATION

(21) Application number: **94116628.2**

(22) Date of filing: **21.10.94**

(51) Int. Cl.⁶: **H01F 10/14**, H01F 41/18

(30) Priority: **29.10.93 JP 272438/93**

(43) Date of publication of application:
**03.05.95 Bulletin 95/18**

(84) Designated Contracting States:
**DE FR GB**

(71) Applicant: **HITACHI, LTD.**
**6, Kanda Surugadai 4-chome**
**Chiyoda-ku,**
**Tokyo 100 (JP)**

(72) Inventor: **Nakano, Asao**
**4-14, Shichirigahama-2-chome**
**Kamakura-shi (JP)**
Inventor: **Tamura, Takuo, Hitachi Asahiryo**
**1545, Yoshidacho,**
**Totsuka-ku**
**Yokohama-shi (JP)**
Inventor: **Suenaga, Kazufumi, Hitachi**
**Fujimiryo 409**
**1545, Yoshidacho,**
**Totsuka-ku**
**Yokohama-shi (JP)**
Inventor: **Ogata, Kiyoshi**
**2-1-2-1006, Ryokuen-4-chome,**
**Izumi-ku**
**Yokohama-shi (JP)**
Inventor: **Sasajima, Souzou**
**4732, Sugaya,**
**Nakamachi**
**Naka-gun,**
**Ibaraki-ken (JP)**
Inventor: **Kumasaka, Noriyuki**
**1-24, Suehirocho-1-chome**
**Ome-shi (JP)**

(74) Representative: **Altenburg, Udo, Dipl.-Phys. et al**
**Patent- und Rechtsanwälte**
**Bardehle . Pagenberg . Dost . Altenburg .**
**Frohwitter . Geissler & Partner**
**Galileiplatz**
**1**
**D-81679 München (DE)**

(54) **Fe-M-C Magnetic film and method of producing the same.**

(57) A magnetic film having a composition composed of Fe, M and C as essential components, in which Fe is in a range of from 65 atomic % to 80 atomic %, M is in a range of from 6 atomic % to 16 atomic %, and C is residual atomic %, M representing at least one kind of metal selected from the group consisting of Ti, Zr, Hf, Nb, V, Ta, Mo, and W, wherein: the magnetic film has a fine microtexture structure in which crystalline microclusters and amorphous microclusters are coexistent with each other; each of the crystalline microclusters has a body-centered cubic structure composed of the C atom and the Fe atom bonded thereto in an amount in a range of from 3 % to 15 % and has a mean grain size in a range of from 5 nm to 14 nm; and each of the amorphous microclusters is composed of the M atom and the C atom and has a mean grain size in a range of from 0.5 nm to 2 nm. The magnetic film is formed by a method of the steps of: preparing an amorphous film of the aforementioned composition by sputtering; and annealing the amorphous film at a low temperature in a range of from 500°C to 560°C for a short time of about 30 minutes in a non-oxidative atmosphere.

EP 0 651 403 A2

# FIG. 1

JUST AFTER FORMATION
OF $Fe_{0.8} Ta_{0.1} Co_{0.1}$ FILM

X-RAY DIFFRACTION INTENSITY I (cps)

DIFFRACTION ANGLE $2\theta$ (DEGREE)

## BACKGROUND OF THE INVENTION

The present invention relates to an Fe-M-C magnetic film and a method of producing the same. For example, this magnetic film is used as a magnetic head material for a VCR, a magnetic disk device or the like, as a core material for an ultramicro inductor contained in the inside of an integrated circuit or as a magnetic pole material for an ultramicro motor, or the like.

As well known, such a conventional magnetic film has been produced, for example, by a thin-film forming technique such as sputtering, or the like, and used in the field of various information appliances such as a recording/reproducing head for a magnetic disk, and so on. In recent years, heightening of recording density has advanced remarkably in the field of magnetic recording. Therefore, the development of a magnetic film for a magnetic head having high saturation magnetic flux density has been required so that recording can be made sufficiently in a recording medium of high coercive force. Further, from a point of view of reproduction of a recording signal, it has been required that permeability is high and magnetostriction approaches a value near zero. On the other hand, from a point of view of the magnetic head producing process, it has been required that durability against heat in heat treatment is high.

As a magnetic film satisfying the requirements, an Fe-Al-Si alloy system (Sendust) and an amorphous alloy such as Co-Nb-Zr, Co-Ta-Zr, etc. have been developed and put into practical use (JP-A-60-74110). Even these magnetic films are not always satisfactory. For example, in the case of Sendust, the saturation magnetic flux density is about 1 T and accordingly Sendust is not always satisfactory. For example, even in the case of a Co amorphous metal high in temperature durability, the allowable temperature is about 500°C and accordingly the Co amorphous metal is not always sufficient to satisfy the conditions for the magnetic head producing process.

As an attempt to improve these points, a magnetic film exhibiting saturation magnetic flux density of from 1.3 T to 1.7 T and durability against a temperature of about 600°C in heat treatment has been developed by using an Fe-N thin film and an Fe(Co)-M-C film (in which M = V, Nb, Ta, Ti, Zr, or the like) [-[Journal of The Magnetics Society of Japan, Vol. 14, pp. 313-318 (1990) and Vol. 14, pp. 319-322 (1990)]].

In these magnetic films, however, for example, in the case of M = Ta, microcrystalline clusters of Fe and TaC or microcrystalline clusters of Fe, TaC and $Ta_2C$ are formed (JP-A-03-131006, JP-A-03-132004 and JP-A-3-203307). Accordingly, annealing at least in conditions of 600°C and several hours has been required for stabilizing the fine microtexture structure of the crystalline clusters and stabilizing the magnetism thereof.

## SUMMARY OF THE INVENTION

The present invention is therefore intended to solve the aforementioned problem in the prior art.

A first object of the present invention is to provide a magnetic film of an Fe-M-C system provided as a structure of high stability of the fine microtexture thereof and high stability of the magnetism thereof, without the necessity of long-term annealing at a high temperature and excellent in production efficiency and excellent so that the original magnetism of this system magnetic film can be fulfilled sufficiently.

A second object of the present invention is to provide a method of producing such a magnetic film.

A third object of the present invention is to provide a magnetic circuit element such as a magnetic head, or the like, using such a magnetic film.

The inventors of the present application have made various experiments and examinations on the structure and magnetism of the Fe-M-C system magnetic film while making free use of the newest analyzing technique. As a result, there has been obtained a finding that a novel structure of the magnetic film capable of improving the stability of the magnetism thereof and the stability of the microtexture structure thereof is present in a specific composition. The present invention has been attained based on the finding, and the above-mentioned first object of the present invention is achieved by the following magnetic film.

That is, the magnetic film according to the present invention is characterized in that: the magnetic film has a composition composed of Fe, M and C as essential components, M representing at least one kind of metal selected from the group consisting of Ti, Zr, Hf, Nb, V, Ta, Mo, and W, Fe being in a range of from 65 atomic % to 80 atomic %, M being in a range of from 6 atomic % to 16 atomic % and C being residual atomic %; the magnetic film has a fine microtexture structure in which crystalline microclusters and amorphous microclusters are coexistent with each other, each of the crystalline microclusters having a body-centered cubic structure composed of the C atom and the Fe atom bonded thereto in an amount of from 3 % to 15 % and having a mean grain size of from 5 nm to 14 nm, each of the amorphous microclusters being composed of the M atom and the C atom and having a mean grain size of from 0.5 nm to 2 nm.

As the composition of respective constituent elements of the magnetic film, elements partly common with the conventional magnetic film are contained in the magnetic film, but the two films extremely differ from each other in the microtexture structure constituting the film. That is, as described above, for example, in the case where the element M is Ta, the conventional magnetic film has a microtexture structure in which a crystal of TaC or $Ta_2C$ formed by bonding with C is coexistent with a crystal of Fe. On the contrary, in the case of the present invention, the element M (for example, Ta) is bonded with C atoms to form amorphous microclusters having a mean grain size of from 0. 5 nm to 2 nm.

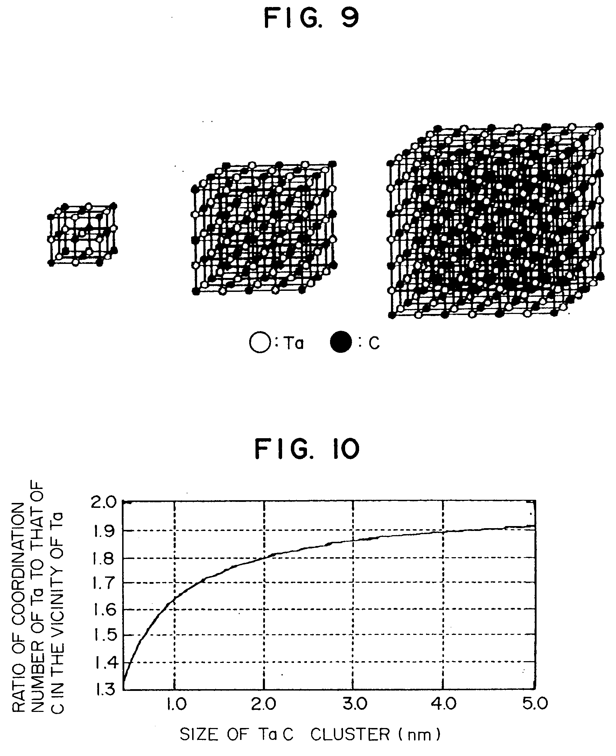

As is obvious from Fig. 9, the magnetic film preferably has a composition composed of Fe in a range of from 65 atomic % to 80 atomic %, M in a range of from 6 % to 16 %, and C of residual atomic %, and more preferably has a composition composed of Fe in a range of from 72 atomic % to 79 atomic %, M in a range of from 8 % to 13 %, and C of residual atomic %. Further, more preferably, the magnetic film has a composition composed of Fe of 78 atomic %, M of 8.7 atomic %, and C of 13.3 atomic %.

If the mean grain size of the crystalline microclusters is smaller than 5 nm, the resulting magnetic film is undesirably inferior in soft magnetism. If the mean grain size is larger than 14 nm, the resulting magnetic film is undesirably large in magnetostriction. Incidentally, the means grain size of the crystalline microclusters is more preferably selected to be in a range of from 0.7 nm to 1.3 nm. Further, more preferably, the mean grain size thereof is selected to be 11.4 nm. If the rate of bonding of Fe atoms with C atoms is out of the range of from 3 % to 15 %, the resulting magnetic film is undesirably large in magnetostriction.

The amorphous microclusters serve as a pinning material against the crystalline microclusters, that is, serve to control the crystal growth of the latter. The mean grain size of the amorphous microclusters is selected to be preferably in a rage of from 0.5 nm to 2 nm, more preferably, in a range of from 0.7 nm to 1.3 nm. If the mean grain size is smaller than 0.5 nm, the crystal growth of the crystalline microclusters cannot be suppressed more greatly than expected. If the mean grain size is larger than 14 nm, the crystal growth of the crystalline microclusters cannot be suppressed still more greatly than expected because of shortage of the number of grains. Further more preferably, the mean grain size of the amorphous microclusters is selected to be 0.9 nm.

Conditions for annealing are not specifically limited as long as the crystalline microclusters and the amorphous microclusters can coexist with each other as described above when the amorphous film of a desired composition is annealed. According to the inventors' examination, it has been found that the crystalline microclusters and the amorphous microclusters are coexistent with each other as described above when the amorphous film is annealed at a temperature in a range of from 500°C to 560°C in an atmosphere of $N_2$, that is, in a non-oxidative atmosphere for a time in a range of from 15 minutes to 60 minutes, preferably, for a time in a range of from 25 minutes to 30 minutes.

The amorphous film is formed on a substrate by sputtering in the presence of a working gas with use of an alloy of a composition stoichiometrically coincident with a desired composition, for example, composed of Fe in a range of from 65 % to 80 %, M in a range of from 6 % to 16 %, and C of residual %, as a target.

Alternatively, the Fe-M-C alloy target may be replaced by an Fe-M alloy target and a $CH_4$ gas of a predetermined partial pressure may be introduced as the C component. The pressure of the working gas at the time of sputtering is preferably selected to be higher than ordinary pressure (for example, $3 \times 10^{-3}$ Pa) and in a range of from about $1 \times 10^{-2}$ Pa to about 3 Pa.

Further, as the crystalline substrate, for example, a substrate having a perovskite structure is preferred. Typical examples thereof include NiO-containing $CaTiO_3$ which is a nonmagnetic substrate. A magnetic substrate of spinel structure such as $(Mn, Zn)Fe_2O_4$ also can be used as the crystalline substrate. Accordingly, in the case where a magnetic head is to be produced by using the magnetic film, NiO-containing $CaTiO_3$ which is a nonmagnetic substrate is preferably used.

Further, as sputtering used in the present invention, various known sputtering methods can be used. Examples of sputtering preferably used include RF bipolar sputtering, magnetron sputtering, bias sputtering, and so on. Above all, there are preferred RF bipolar sputtering simple in the apparatus structure thereof and adapted for forming a uniform film on a broad substrate, magnetron sputtering adapted for high-speed low-temperature conditions, and so on. If the magnetic film formed by sputtering is annealed at a temperature of from 500°C to 560°C for a time of not larger than one hour, preferably, no larger than 30 minutes, the magnetic film can be annealed sufficiently. Accordingly, high-temperature long-term heat treatment has to be avoided. The atmosphere for annealing is, for example, selected to be a non-oxidative atmosphere such as an atmosphere of $N_2$. Further, the thickness of the magnetic film is selected suitably in accordance with the purpose of use and generally selected to be in a range of 2 $\mu$m to 20 $\mu$m.

As described above, the third object is to provide a magnetic circuit element using this magnetic film. Typical application examples thereof include a magnetic head and a micro magnetic core, each of which is obtained by forming this magnetic film on a nonmagnetic substrate. For example, the magnetic head is applied to a magnetic recording apparatus, and the micro magnetic core is applied to an inductor in an integrated circuit and further to an ultramicro motor.

In the magnetic film according to the present invention, Fe atoms bonded with C atoms by an amount of from 3 % to 15 % form microclusters having a body-centered cubic structure ($\alpha$-Fe) and M atoms (for example, Ta atoms) and C atoms form amorphous microclusters to make the two kinds of microclusters coexistent with each other to thereby give the magnetic film an effect of suppressing the growth of the crystalline microclusters of Fe atoms against heat applied in a process of producing a magnetic head, or the like. Further, C atoms in the microclusters of Fe atoms have an $Fe_3C$ (cementite) type local structure, so that the magnetostriction can be set to be almost zero (<0.000001) as a result of the coexistence of the fine crystal Fe atom micro clusters and the cementite type local structure.

Because Fe atoms form crystalline microclusters having a body-centered cubic structure ($\alpha$-Fe), anisotropy of the structure is dispersed. As a result, the magnetocrystalline anisotropic effect is reduced, so that soft magnetism of high permeability and of low coercive force is obtained. Further, because the number of Fe atoms bonded with C atoms is small (from 3 % to 15 % of Fe), there is little reduction of magnetic moment of Fe. Accordingly, excellent magnetism is exhibited. It is considered that a large part of C atoms are bonded with M atoms to form amorphous microclusters having a mean grain size of from 0.5 nm to 2 nm and that the residual part of C components other than the C components bonded with M atoms are bonded with Fe atoms.

If the amorphous film formed by sputtering is annealed at a temperature of from 500°C to 560°C for a time of not larger than one hour, preferably, no larger than 30 minutes, the magnetic film can be annealed sufficiently. Accordingly, high-temperature long-term heat treatment has to be avoided. This is because the microtexture structure of the preferred magnetic film is destroyed so that the amorphous microcluster component formed by bonding of M atoms and C atoms is reduced.

BRIEF DESCRIPTION OF THE DRAWINGS

These and other objects and technical advantages of the present invention will be readily apparent from the following description of the preferred exemplary embodiments of the invention in conjunction with the accompanying drawings, in which:

Fig. 1 is a characteristic curve graph for explaining the structure analysis of a magnetic film as an embodiment of the present invention, which graph shows X-ray diffraction spectra of the magnetic film in the case where CuK$\alpha$ X-ray is applied to the magnetic film just after the magnetic film is formed as a composition $Fe_{0.8}Ta_{0.1}C_{0.1}$ on a nonmagnetic substrate;

Fig. 2 is a like graph which shows X-ray diffraction spectra of the magnetic film in the case where the magnetic film is heat-treated at 500°C in the atmosphere of $N_2$;

Fig. 3 is a like graph which shows X-ray diffraction spectra of the magnetic film in the case where the magnetic film is heat-treated at 560°C in the atmosphere of $N_2$;

Fig. 4 is a like graph which shows fluorescent X-ray yield spectra at a TaLIII absorption edge of the magnetic film just after the magnetic film is formed;

Fig. 5 is a like graph of a radial distribution function curve with Ta atoms as its center, analyzed on the basis of the fluorescent X-ray yield spectra at the TaLIII absorption edge in Fig. 4 with respect to the magnetic film just after the magnetic film is formed;

Fig. 6 is a like graph of a radial distribution function curve with Ta atoms as its center, analyzed on the basis of the fluorescent X-ray yield spectra of the magnetic film in the case where the magnetic film is heat-treated at 500°C in the atmosphere of $N_2$;

Fig. 7 is a like graph of a radial distribution function curve with Ta atoms as its center, analyzed on the basis of the fluorescent X-ray yield spectra of the magnetic film in the case where the magnetic film is heat-treated at 560°C in the atmosphere of $N_2$;

Fig. 8 is a view showing a Ta atom cluster having an amorphous body-centered cubic structure and a cluster structure model in which Ta atoms at a surface of the cluster are bonded with C atoms;

Fig. 9 is a view showing a crystalline lattice model of TaC;

Fig. 10 is a graph showing relations between coordination number and cluster size by model calculation;

Fig. 11 is a triangular view showing relations between composition and magnetism (permeability $\mu$) of the magnetic thin film in the case where the composition of the magnetic film is changed by the change of the film-forming condition;

Fig. 12 is a perspective view showing an important part of a VCR magnetic head in the case where the Fe-Ta-C magnetic thin film according to the present invention is applied to the VCR magnetic head;

Fig. 13 is a perspective view showing an important part of an integrated circuit substrate in the case where the Fe-Ta-C magnetic thin film according to the present invention is applied to an inductor so that an ultramicro magnetic core is mounted on the integrated circuit substrate;

Fig. 14 is a section taken along the line B-B in Fig. 13; and

Fig. 15 is an enlarged perspective view of an important part of an ultramicro motor in the case where an ultramicro core having the Fe-Ta-C magnetic thin film according to the present invention is applied to the ultramicro motor.

DESCRIPTION OF THE PREFERRED EMBODIMENTS

The contents of the present invention will be described below more specifically with respect to representative embodiments.

⟨Embodiment 1⟩

The microtexture structure of an amorphous film and the technique of forming the amorphous film will be now described.

(1) Film-forming Conditions

An rf bipolar sputtering apparatus made by inventors to realize the embodiment was used for forming a magnetic film. In order to make the quality of the film as uniform as possible, film formation was performed by sputtering in the presence of a mixed gas of Ar (purity 99.9 %) and $CH_4$ (purity 99.9 %) while using an alloy of Fe (purity 99.9 %) and Ta (purity 99.9 %) as a target. The composition of the film was controlled on the basis of the constituent atom proportion of the alloy target and the partial pressure of the $CH_4$ gas.

Conditions for the sputtering were as follows.

| | |
|---|---|
| Ultimate vacuum | $< 1.3 \times 10^{-2}$ Pa |
| Input electric power | 600 W |
| Gas pressure | 0.67 Pa |
| Substrate | perovskite substrate (not heated): Nonmagnetic substrate of $CaTiO_3$ containing NiO was used. |
| Film thickness | 20 $\mu$m |

Thus, an amorphous film of a composition $Fe_{0.8}Ta_{0.1}C_{0.1}$ was formed on a perovskite substrate.

(2) Analysis of the Structure of the Amorphous Film

The composition of the amorphous film formed in the aforementioned conditions was analyzed with an X-ray Micro Analyzer (XMA) (made by: Siemens A.G., type: SRS303 DA/WA). The structure of the amorphous film was analyzed up to the atomic level with an X-ray diffractiometer (made by: philips, type: PW 1050/1390) and an Extended X-ray Absorption Fine Structure (EXAFS) measurement system (made by the inventors to realize the embodiment) using light emitted by a synchrotron (belongs to National Laboratory for High Energy Physics) as a light source.

(2)-1 X-ray Diffraction Analysis of the Structure of the Amorphous Film

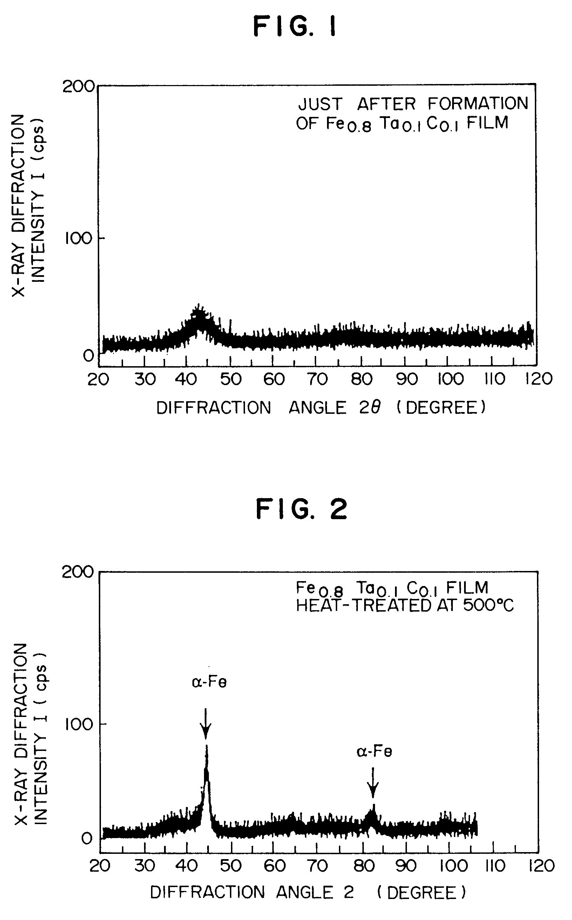

Figs. 1 to 3 show measurement results of X-ray diffraction in the respective cases where CuKα X-rays were applied to three kinds of amorphous films formed as a composition $Fe_{0.8}Ta_{0.1}C_{0.1}$ on a nonmagnetic substrate, that is, an amorphous film just after film formation and amorphous films heat-treated in an atmosphere of $N_2$ for 30 minutes at 500 °C and 560 °C respectively. Incidentally, the rate of heating from room temperature to 500 °C or 560 °C was 6.66 °C/min, and the rates of cooling from 500 °C or 560 °C to room temperature were 3 °C/min in a range of from 500 °C or 560 °C to 400 °C, 2 °C/min in a range of from 400 °C to 200 °C, and 1 °C/min in a range of from 200 °C to room temperature, respectively. Further, used was an annealing apparatus formed by the inventors of the present invention by using an electric furnace made by Okura Riken Co., Ltd., and an electromagnet made by Tokin Corporation.

6

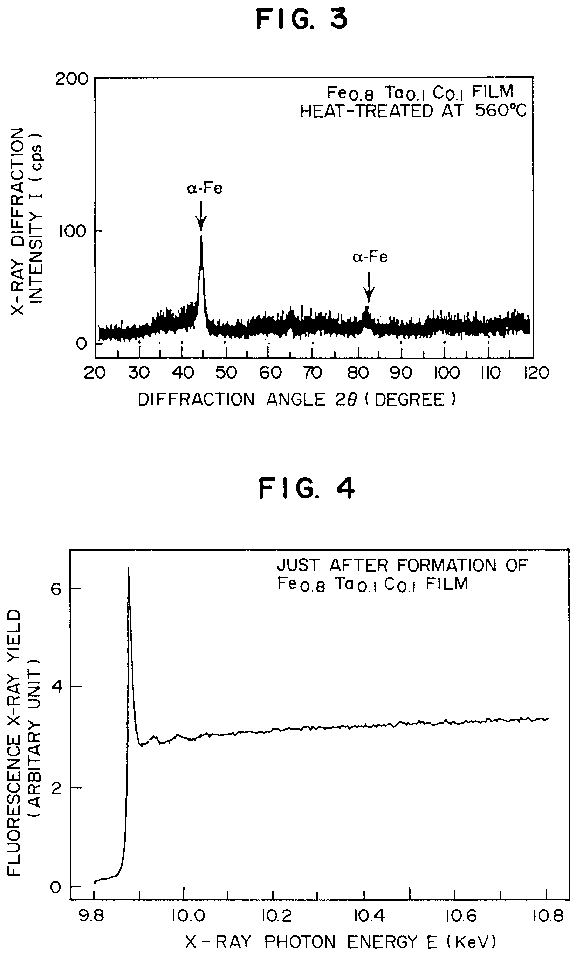

Fig. 1 shows X-ray diffraction spectra just after film formation, which spectra show an amorphous structure exhibiting a broad scattering peak. When the amorphous film is heat-treated, only diffraction peaks of $\alpha$-Fe crystal of a body-centered cubic structure are measured as shown in Figs. 2 and 3. In the case of the film heat-treated at 500 °C, besides the diffraction peaks of $\alpha$-Fe crystal, there are observed a broad scattering peak in the vicinity of $2\theta = 43$ ° and a scattering peak in the vicinity of $2\theta = 37$ ° like the case of the film just after film formation. In the case of the film heat-treated at 560 °C, the scattering peak in the vicinity of $2\theta = 37$ ° becomes slightly sharp compared with the case of the film heat-treated at 500 °C.

It is very difficult in the X-ray diffraction method to clarify the aforementioned atomic level structure of an amorphous material. The measurement of the Extended X-ray Absorption Fine Structure (EXAFS) is useful for analysis of the structure of such an amorphous material and, particularly, very excellent for analysis of the structure of a multi-component thin film containing two or more components. In this analysis, the influence of the interference of photoelectrons propagating in the inside of a thin film on the absorption coefficient and fluorescent yield of X-rays is measured by using an X-ray absorption edge peculiar to each element to thereby obtain the interatomic distance between atoms and the kind and number (coordination number) of an atom surrounding a specific atom. Accordingly, there is no matter whether the subject material is crystalline or noncrystalline (amorphous).

(2)-2 Analysis of the Structure of the Magnetic Film on the Basis of the Extended X-ray Absorption Fine Structure (EXAFS)

Energy dependence (fluorescent X-ray yield spectra) of the fluorescent X-ray yield in a range of from a Ta atom LIII absorption edge (E = 9.875 keV) to X-ray photon energy higher by about 500 eV was measured by using light emitted by the synchrotron as a light source for X-rays.

Fig. 4 shows measurement results of the fluorescent X-ray yield just after formation of the amorphous film $Fe_{0.8}Ta_{0.1}C_{0.1}$. Spectra of the films heat-treated in an atmosphere of $N_2$ for 30 minutes at 500 °C and 560 °C respectively are not shown in Fig. 4, because the apparent spectra thereof are substantially the same as the measurement results of the thin film just after film formation. The difference between the thus measured fluorescent X-ray yield spectra and fluorescent X-ray yield spectra on the assumption that Ta atoms stand alone is $EXAFS_{\chi_0}(k)$. The analysis of the structure of the amorphous material can be performed by analyzing this difference.

The fact that information of electron density relative to length is obtained when the EXAFS is Fourier-transformed with respect to $\underline{k}$ in accordance with the following equation (1) because the EXAFS is a function of wave number space (the unit of $\underline{k}$ is a reciprocal of length) has been reported by Sayers et al. in Physical Review Letter 27, 1204 (1971).

$$F(R) = (2/\pi) \int_{kmin}^{kmax} k^2 \chi_0(k) \exp(-2ikR)dk \qquad \ldots\ldots(1)$$

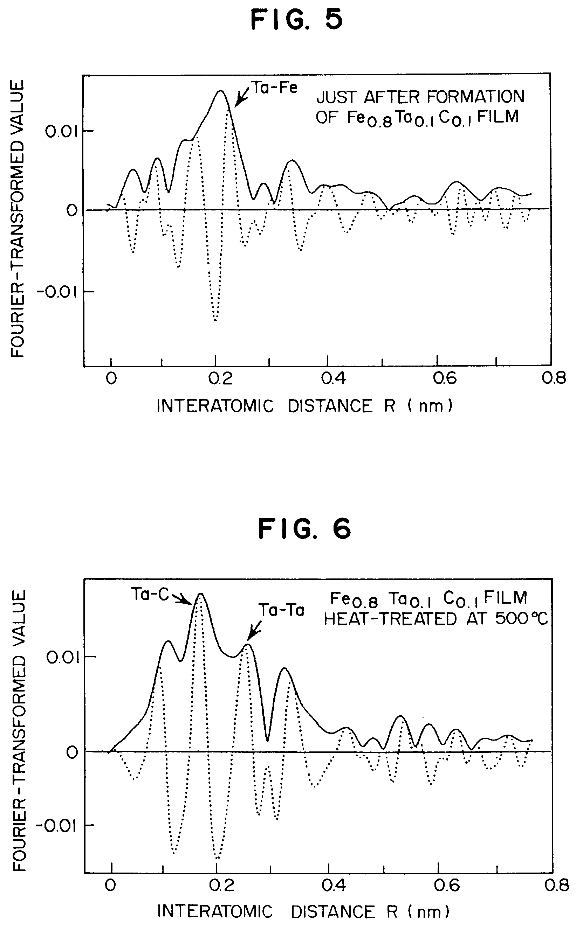

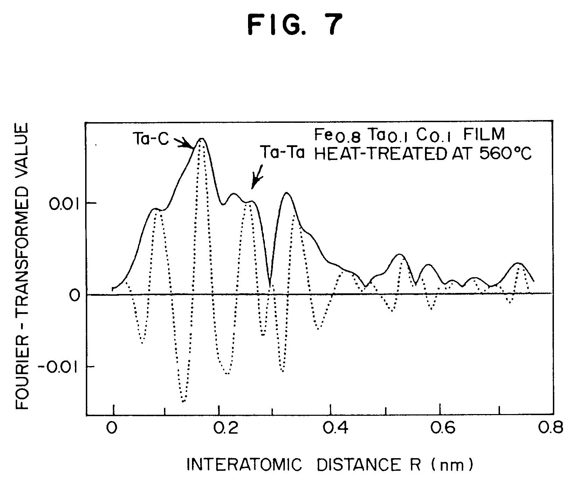

In the equation, $\underline{k}$ represents the wave number of photoelectron wave generated by X-rays, R represents a radius with an atom bringing out absorption as the center, and kmin and kmax represent minimum and maximum values in the range of $\underline{k}$ in $\chi_0(k)$ measured. F(R) obtained here is called a radial distribution function which expresses an electron density distribution in the distance of the radius R from the center atom and means the fact that an atom exists in the position of a local maximum. When radial distributions F(R) with respect to the fluorescent X-ray yield spectra are obtained, functions as shown in Figs. 5 to 7 are obtained. Each of these is a radial distribution function with an Ta atom in the magnetic film of the composition $Fe_{0.8}Ta_{0.1}C_{0.1}$ as the center and expresses an amorphous material structure exhibiting broad scattering peaks besides the diffraction peaks of $\alpha$-Fe crystal in X-ray diffraction.

It is apparent from the radial distribution functions that an atom bonded with Ta exists at an interatomic distance in a range of from 0.1 nm to 0.3 nm. The numerical analysis of the EXAFS is performed in accordance with the following theoretical equation (2). Interatomic distance and coordination number which are parameters for an atomic level structure can be obtained by the least square method on the basis of $\chi_C(k)$ shown in the equation (2) and $\chi_0(k)$ measured actually.

$$\chi_C(k) = \Sigma_j N_j f_j(k) \sin(2kR_j + \phi_j(k)) \exp(-2\sigma_j k)/kR_j \qquad (2)$$

$$RF = \Sigma |\chi_0(k) - \chi_C(k)|^2 / \chi_0(k)^2 \qquad (3)$$

In the equations, $j$ represents a subscript expressing the kind of atoms in the vicinity of the X-ray absorption atom, $N_j$ represents the number (coordination number) of j-kind atoms in the vicinity of the X-ray absorption atom, $f_j$ represents the backscattering amplitude of the j-kind atoms for the electron wave, $R_j$ represents the interatomic distance between the X-ray absorption atom and j-kind atoms in the vicinity of the X-ray absorption atom, $\phi_j(k)$ represents a phase displacement caused by scattering of photoelectrons, and $\sigma_j$ represents a Debye-Waller factor. In the equation (3), RF is a factor expressing coincidence between $\chi_0(k)$ and $\chi_C(k)$. Parameters are set so that RF is minimized. Among these factors, $f_j$ and $\phi_j$ are parameters peculiar to each element, and $R_j$, $N_j$ and $\sigma_j$ are amorphous structure parameters determined by the least square method. The expression of the structure can be discussed mainly on the basis of the interatomic distance ($R_j$) and the coordination number ($N_j$).

Films of the composition $Fe_{0.8}Ta_{0.1}C_{0.1}$ each formed on a nonmagnetic substrate were heat-treated in an atmosphere of $N_2$ for 30 minutes at 500°C (sample b) and 560°C (sample c) respectively to prepare samples b and c (not heat-treated, sample a). Then, the samples were analyzed on the basis of the measurement of the EXAFS at a Ta atom LIII absorption edge with Ta as the center atom. Results thereof together with analysis results of Ta metal foil (sample d) and crystalline TaC powder (sample e) as reference samples are shown in Table 1.

TABLE 1

ANALYSIS RESULT OF INTERATOMIC DISTANCE AND COORDINATION NUMBER ON THE BASIS OF EXAFS

| Sample | Ta-Fe | | Ta-C | | Ta-Ta | |
|---|---|---|---|---|---|---|
| | R (nm) | N | R (nm) | N | R (nm) | N |
| a | 0.2652(2) | 7.4(4) | – | – | – | – |
| b | – | – | 0.216(2) | 4.39(1) | 0.312(2) | 5.62(1) |
| c | – | – | 0.2170(4) | 3.76(9) | 0.3114(4) | 6.1(5) |
| d | – | – | – | – | 0.2861(1) | 8 |
| e | – | – | 0.2203(4) | 6 | 0.3161(2) | 12.0(5) |

The respective coordination numbers of the samples (a), (b) and (c) were obtained on the basis of the coordination numbers of the reference samples (d) and (e) having known structures. In the table, R represents the interatomic distance, N represents the coordination number, the numerical value enclosed in parentheses represents the in-table deviation value of the last digit in each numerical value.

In the analysis results, the interatomic distance of the metal Ta crystal reference sample (sample d) of the body-centered cubic structure and the interatomic distance of the TaC crystal reference sample (sample e) of the face-centered cubic lattice NaCl type structure are coincident with values obtained by X-ray diffraction. With respect to the number of C atoms in the vicinity of the Ta atom, the direct analyzed value is not coincident with the actual value because the C atoms are light-weighted elements so that the number of electrons scattering electron wave is small. Because the number of Ta atoms in the metal Ta reference sample and the number of Ta atoms in the vicinity of the Ta atom in the TaC crystal reference sample are substantially coincident with theoretical values by the same correction value, correction is made so that the number of C atoms in the vicinity of the Ta atom in the TaC reference crystal sample approaches the theoretical value 6 and the thus corrected values are shown in Table 1.

The coordination number of Ta atoms in the film just after film formation is substantially coincident with a value obtained by multiplying the coordination number in the body-centered cubic by 0.8 corresponding to the composition of Fe atoms, so that there is no special condition in which clusters are formed. This shows the fact that the number of Fe atoms becomes largest in the vicinity of Ta in accordance with the composition and, also from the results of X-ray diffraction, this means an amorphous state in which the respective atoms of Fe, Ta and C exist at random.

When this amorphous film is heat-treated, a change appears clearly. As is obvious from comparison with the sample $\underline{a}$ before heat-treatment, in the samples heat-treated in an atmosphere of $N_2$ at 500°C (sample $\underline{b}$) and 560°C (sample $\underline{c}$) respectively, C and Ta atoms exist in the vicinity of the Ta atom, so that the interatomic distance between Ta and C and the interatomic distance between Ta and Ta are substantially coincident with the interatomic distance in the TaC crystal reference sample of the face-centered cubic lattice NaCl type structure. Accordingly, the structure of the vicinity of the Ta atom is the same amorphous structure as the NaCl type structure and mainly the Ta atom is bonded with C atoms. As shown in Table 1, in the samples $\underline{b}$ and $\underline{c}$ heat-treated, Fe atoms are made to be not adjacent to the Ta atom, so that the structure thereof is changed differently from that of the thin film just after film formation.

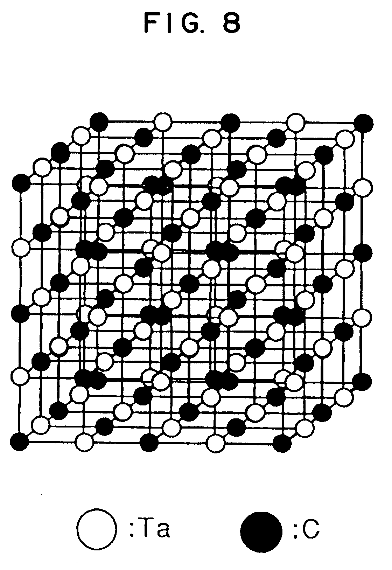

It is apparent from the results of analysis of the atomic level structure that the Fe-Ta-C thin film according to the present invention does not contain crystal components of TaC and $Ta_2C$ though the film is heat-treated. From the analysis of the interatomic distance between Ta and Ta, there is inferred the structure in which Ta atoms form a cluster having a disorganized (amorphous) body-centered cubic structure in the thin film so that C atoms at the surface of the cluster are bonded with Fe atoms. Fig. 8 shows a structure model thereof. The number of constituent atoms of this cluster can be approximately obtained by analyzing the thin films heat-treated in an atmosphere of $N_2$ at 500°C and 560°C respectively by an analyzing method which will be described later, and further, the size of the cluster can be obtained by supposing the amorphous body-centered cubic structure of Ta atoms. The size of the Ta atom cluster obtained in this manner is 0.5 nm diameter in the case of the thin film heat-treated at 500°C and 0.9 nm diameter in the case of the thin film heat-treated at 560°C. It is considered that such amorphous clusters are present between Fe fine crystal grains to prevent the $\alpha$-Fe crystal from growing.

In the following, the method of obtaining the amorphous cluster size will be described.

In order to estimate the size of the TaC amorphous cluster, relations between the cluster size (diameter) and the coordination number ratio of Ta to C in the vicinity of Ta are deduced. Because the TaC crystal has an NaCl type structure, the structure of the TaC microcluster is assumed to be the same as the NaCl type structure. Models shown in Fig. 9 are considered with respect to clusters inclusive of the cases of $N = 1$, $2^3$ and $3^3$ when N represents the number of unit lattices. In the drawing, $\bigcirc$ represents a Ta atom, and $\bullet$ represents a C atom.

The respective numbers of Ta atoms and C atoms coordinated in Ta atoms in a TaC microcluster are calculated on the basis of the change of the lattice size in Fig. 9, so that the ratio thereof is obtained. This is expressed as represented by the following equation (4). Fig. 10 shows the ratio of the coordination number of Ta atoms to the coordination number of C atoms in the vicinity of Ta atoms, the ratio being expressed in a function of TaC cluster size.

$$y = \frac{8x^2 + 1.784x}{4x^2 + 1.784x + 0.199} \qquad \ldots\ldots(4)$$

x:  TaC cluster size (nm) ($x \geq 0.446$ nm)

y:  coordination number ratio of Ta to C in the vicinity of Ta

When the ratio of the coordination number of Ta atoms to the coordination number of C atoms in the vicinity of Ta atoms, obtained from the EXAFS analysis results (see Table 1) of the sample (b) (heat-treated at 500°C (773K)) and the sample (c) (heat-treated at 560°C (833K)) is related to the function shown in the graph of Fig. 9, the value 1.62 in the sample (b) and the value 1.34 in the sample (c) are converted into about 0.9 nm and about 0.5 nm respectively as TaC cluster size.

In the EXAFS analysis results, it is reasonable that the thin film of the composition $Fe_{0.8}Ta_{0.1}C_{0.1}$ as a typical example has a structure in which the number of C atoms bonded with Ta is about 85 % and the residual C atoms of about 15 % are mixed in $\alpha$-Fe crystal grains in the body-centered cubic structure constituted by Fe atoms or bonded with the surfaces of the $\alpha$-Fe crystal grains.

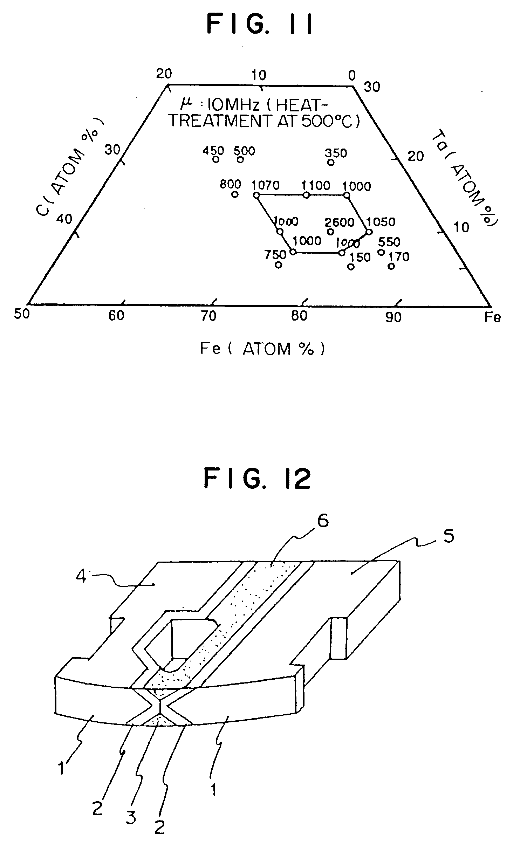

Next, thin films were formed while the film-forming conditions were changed so that the composition thereof was changed. The magnetisms of the thin films were measured in constant heat-treatment conditions (in an atmosphere of $N_2$, 500°C, 30 minutes). Results thereof were expressed in relations between composition and magnetism in the triangular view of Fig. 11. When these thin films were subjected to amorphous structure analysis by using the EXAFS measurement system, analysis results the same as the composition $Fe_{0.8}Ta_{0.1}C_{0.1}$ described preliminarily as a typical example were obtained. Incidentally,

permeability $\mu$ in Fig. 11 is shown as a value measured at a frequency of 10 MHz.

The number of Ta atoms and the number of C atoms in the vicinity of the Ta atoms change in accordance with the composition. In a preferred region exhibiting higher permeability than 1,000 as surrounded by the solid line in Fig. 11, Ta-C amorphous clusters have a mean grain size of from 0.5 nm to 2 nm. Accordingly, $\alpha$-Fe crystal grains have a mean grain size of from 10 nm to 14 nm in accordance with the composition and have a microtexture structure in which 3 % to 15 % of Fe atoms are bonded with C atoms. By giving such a structure, the growth of $\alpha$-Fe crystal grains is suppressed so that good soft magnetism is obtained. Accordingly, if the composition is out of the preferred range shown in Fig. 11, the crystal growth of $\alpha$-Fe crystal grains cannot be suppressed by heat-treatment so that soft magnetism becomes poor because a large number of C atoms enter into the $\alpha$-Fe crystal grains or the size of the Ta amorphous clusters is too small compared with the size of the $\alpha$-Fe crystal grains. Incidentally, in the preferred region surrounded by the solid line in Fig. 11, saturation magnetic flux density of 1.6 T is exhibited.

Although the microtexture structure and magnetism of an Fe-M-C system magnetic film having a composition composed of from 65 atomic % to 80 atomic % of Fe, from 6 atomic % to 16 atomic % of M, and residual atomic % of C have been described above with the case of M = Ta as a typical example, the same effect can be achieved also in the case where M is selected from other metals such as Ti, Zr, Hf, Nb, V, Mo, and W as explained above.

〈Embodiment 2〉

In this embodiment, there is shown an example of structure in which a VCR magnetic head is realized by using the Fe-Ta-C system magnetic thin film obtained in Embodiment 1. This embodiment will be described below with reference to Fig. 12. Fig. 12 is a perspective view showing a head chip in a state in which a coil is removed. In the drawing, the reference numeral 1 designates a perovskite system nonmagnetic substrate; 2, Fe-Ta-C system magnetic films according to the present invention; 3, an $SiO_2$ gap layer; 4, a chip having a window; 5, a chip having no window; and 6, a glass joint portion.

In this embodiment, a VCR magnetic head chip is formed through a process in which the Fe-Ta-C system magnetic films 2 having a thickness of from 15 $\mu$m to 20 $\mu$m is formed on the nonmagnetic substrate 1, the $SiO_2$ gap layer 3 is formed, and then the chip 4 having a window and the chip 5 having no window are joined by glass to form the joint portion 6. The structure of the VCR magnetic head shown in this embodiment has been described as an example, and the present invention can be similarly applied also to other known devices, for example, to heads for magnetic recording apparatuses such as a magnetic disk device, etc., or the like, and the excellent characteristic of the magnetic film according to the present invention can be fulfilled.

〈Embodiment 3〉

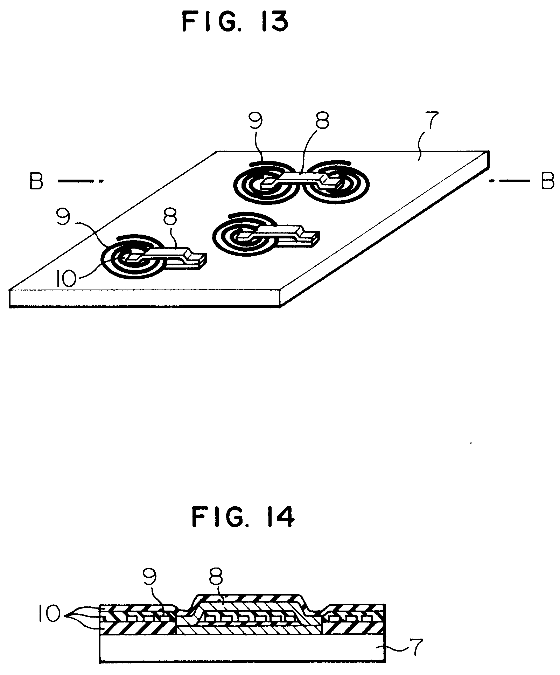

This embodiment shows an example in which the magnetic thin film obtained in Embodiment 1 is applied to a micro magnetic core for an inductor provided in an LSI circuit. Referring now to Figs. 13 and 14 which are a perspective view of an important part thereof and a section thereof, respectively, the reference numeral 7 designates a circuit substrate; 8, an Fe-Ta-C system magnetic film according to the present invention; 9, a coil patterned on a circuit; and 10, an insulating protective film. By forming such a micro magnetic core on the LSI substrate 7, an inductor can be formed in the LSI circuit so that the formation of an integrated circuit functionally richer than the conventional integrated circuit can be performed.

〈Embodiment 4〉

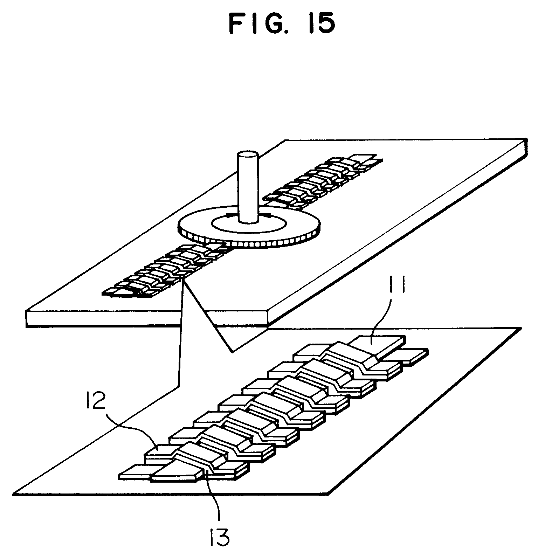

This embodiment shows an example in which the magnetic thin film obtained in Embodiment 1 is applied to a micro magnetic core for an ultramicro motor. Referring now to Fig. 15 which is a partly enlarged perspective view of an important part thereof, the reference numeral 11 designates a circuit substrate; 12, magnetic cores obtained by using an Fe-Ta-C system magnetic film according to the present invention; 13, a coil patterned on a circuit; and 14, an insulating protective film. By forming such an ultramicro motor, computer controlling requiring mechanical ultramicro displacement can be performed, for example, for the purpose of DNA cutting in the field of bioengineerings, or the like, so that high-precision controlling can be made in the wide field of ultramicro machining.

As described above in detail, the expected objects of the present invention could be achieved by the present invention. That is, not only the stability of magnetism and the stability of the microtexture structure of the film can be improved but also the heat-treatment conditions after film formation can be made low-temperature short-time conditions, so that a magnetic film excellent in production efficiency can be provided. Further, a method of producing the magnetic film can be provided as a simple method in which a target, a gas pressure and a substrate are set in specific conditions in accordance with conventional sputtering without necessity of any special complex process. Further, magnetic circuits of high performance can be provided by application of the magnetic film having excellent magnetism to various types of magnetic circuits. For example, not only improvement in performance of a magnetic head and improvement in performance of an inductor in an integrated circuit can be made but also high-precision machining in the field of bioengineerings can be made by forming an ultramicro motor, so that bioengineerings improved in the degree of freedom compared with the conventional case can be realized.

The present invention has been described in detail, it should be understood that various changes, substitutions and alterations can be made hereto without departing from the spirit and scope of the present invention as defined by the appended claims.

## Claims

1. An Fe-M-C system magnetic film having a composition composed of Fe in a range of from 65 atomic % to 80 atomic %, M in a range of from 6 atomic % to 16 atomic %, and C of residual atomic %, M representing at least one kind of metal selected from the group consisting of Ti, Zr, Hf, Nb, V, Ta, Mo, and W, wherein said magnetic film is characterized in that said magnetic film has a fine microtexture structure in which crystalline microclusters and amorphous microclusters are coexistent with each other.

2. A magnetic film according to Claim 1, characterized in that each of said crystalline microclusters has a body-centered cubic structure composed of the C atom and the Fe atom bonded thereto in an amount in a range of from 3 % to 15 % and has a mean grain size in a range of from 5 nm to 14 nm; and each of said amorphous microclusters is composed of the M atom and the C atom and has a mean grain size in a range of from 0.5 nm to 2 nm.

3. A magnetic film according to Claim 2, wherein said composition is composed of Fe in a range of from 72 atomic % to 79 atomic %, M in a range of from 8 % to 13 %, and C of residual atomic %.

4. A magnetic film according to Claim 2, wherein said composition is composed of Fe of about 78 atomic %, M of about 8.7 atomic %, and C of about 13.3 atomic %.

5. A magnetic film according to Claim 2, wherein the mean grain size of said crystalline microclusters is from 10 nm to 12 nm.

6. A magnetic film according to Claim 3, wherein the mean grain size of said crystalline microclusters is in a range of from 10 nm to 12 nm.

7. A magnetic film according to Claim 4, wherein the mean grain size of said crystalline microclusters is about 11.4 nm.

8. A magnetic film according to Claim 2, wherein the mean grain size of said amorphous microclusters is in a range of from 0.7 nm to 1.3 nm.

9. A magnetic film according to Claim 3, wherein the mean grain size of said amorphous microclusters is in a range of from 0.7 nm to 1.3 nm.

10. A magnetic film according to Claim 5, wherein the mean grain size of said amorphous microclusters is in a range of from 0.7 nm to 1.3 nm.

11. A magnetic film according to Claim 6, wherein the mean grain size of said amorphous microclusters is in a range of from 0.7 nm to 1.3 nm.

12. A magnetic film according to Claim 7, wherein the mean grain size of said amorphous microclusters is about 0.9 nm.

**13.** A magnetic film according to Claim 2, wherein the whole or a part of said M is constituted by Ta.

**14.** A magnetic film according to Claim 11, wherein the whole or a part of said M is constituted by Ta.

**15.** A magnetic film according to Claim 12, wherein the whole or a part of said M is constituted by Ta.

**16.** A magnetic film according to Claim 1, wherein said magnetic film is obtainable by annealing an amorphous film of said composition at a temperature in a range of from 500 °C to 560 °C for a time in a range of from 15 minutes to 60 minutes in a non-oxidative atmosphere.

**17.** A magnetic film according to Claim 15, wherein said magnetic film is obtainable by annealing an amorphous film of said composition at a temperature in a range of from 500 °C to 560 °C for a time in a range of from 25 minutes to 35 minutes in a non-oxidative atmosphere.

**18.** A magnetic film according to Claim 2, wherein said magnetic film is obtainable by annealing an amorphous film of said composition at a temperature in a range of from 500 °C to 560 °C for a time in a range of from 15 minutes to 60 minutes in a non-oxidative atmosphere.

**19.** A method of producing an Fe-M-C system magnetic film, comprising:
   a first step of preparing a not-yet-annealed amorphous film by an amorphous composition composed of Fe in a range of from 65 atomic % to 80 atomic %, M in a range of from 6 atomic % to 16 atomic %, and C of residual atomic %, M representing at least one kind of metal selected from the group consisting of Ti, Zr, Hf, Nb, V, Ta, Mo, and W; and
   a second step of annealing said amorphous film so that crystalline microclusters and amorphous microclasters are coexistent with each other in a fine microtexture structure of the resulting magnetic film.

**20.** A producing method according to Claim 19, in which in said second step, said amorphous film is annealed at a temperature in a range of from 500 °C to 560 °C for a time in a range of from 15 minutes to 60 minutes in a non-oxidative atmosphere.

**21.** A producing method according to Claim 20, in which in said first step, said amorphous film is formed on a crystalline substrate by sputtering in the presence of a working gas while using an Fe-M-C alloy having a composition stoichiometrically coincident with said composition as a target.

**22.** A producing method according to Claim 21, in which the pressure of said working gas is from 0.01 Pa to 3 Pa.

**23.** A producing method according to Claim 21, in which said crystalline substrate has a perovskite structure.

**24.** A producing method according to Claim 21, in which said sputtering is RF bipolar sputtering or magnetron sputtering.

**25.** A producing method according to Claim 20, in which in said first step, said amorphous film is formed on a crystalline substrate by sputtering in the presence of a working gas containing a $CH_4$ gas of controlled partial pressure while using an Fe-M alloy as a target.

**26.** A producing method according to Claim 25, in which the pressure of said working gas is from 0.01 Pa to 3 Pa.

**27.** A producing method according to Claim 25, in which said crystalline substrate has a perovskite structure.

**28.** A producing method according to Claim 25, in which said sputtering is RF bipolar sputtering or magnetron sputtering.

29. A producing method according to Claim 20, in which the time required for the annealing is in a range of from 25 minutes to 35 minutes.

30. A producing method according to Claim 20, in which the time required for the annealing is about 30 minutes.

31. A producing method according to Claim 18, in which: each of said crystalline microclusters in said second step has a body-centered cubic structure composed of the Fe atom and the C atom; and each of said amorphous microclusters in said second step has a face-centered cubic lattice NaCl type structure composed of the M atom and the C atom.

32. A producing method according to Claim 18, in which: each of said crystalline microclusters in said second step has a body-centered cubic structure composed of the C atom and the Fe atom bonded thereto in an amount in a range of from 3 % to 15 % and has a mean grain size in a range of from 5 nm to 14 nm; and each of said amorphous microclusters in said second step has a face-centered cubic lattice NaCl type structure composed of the M atom and the C atom and has a mean grain size in a range of from 0.5 nm to 2 nm.

33. A magnetic circuit element having a magnetic film as defined in Claim 1.

34. A magnetic head having a magnetic film (2) as defined in Claim 1.

35. A magnetic core having a magnetic film (8) as defined in Claim 1.

36. An ultramicro inductor having a magnetic core as defined in Claim 35.

37. An ultramicro motor having a magnetic core as defined in Claim 35.

EP 0 651 403 A2

## FIG. 1

JUST AFTER FORMATION OF $Fe_{0.8}Ta_{0.1}Co_{0.1}$ FILM

X-RAY DIFFRACTION INTENSITY $I$ (cps)

DIFFRACTION ANGLE $2\theta$ (DEGREE)

## FIG. 2

$Fe_{0.8}Ta_{0.1}Co_{0.1}$ FILM HEAT-TREATED AT 500°C

$\alpha$-Fe

$\alpha$-Fe

X-RAY DIFFRACTION INTENSITY $I$ (cps)

DIFFRACTION ANGLE 2 (DEGREE)

# FIG. 3

Fe$_{0.8}$ Ta$_{0.1}$ Co$_{0.1}$ FILM
HEAT-TREATED AT 560°C

# FIG. 4

JUST AFTER FORMATION OF
Fe$_{0.8}$ Ta$_{0.1}$ Co$_{0.1}$ FILM

## FIG. 5

## FIG. 6

# FIG. 7

# FIG. 8

◯ :Ta     ● :C

# FIG. 9

○ : Ta　● : C

# FIG. IO

RATIO OF COORDINATION
NUMBER OF Ta TO THAT OF
C IN THE VICINITY OF Ta

SIZE OF Ta C CLUSTER ( nm )

20

# F I G. II

# F I G. 12

# FIG. 13

# FIG. 14

FIG. 15